# EUROPÄISCHE PATENTSCHRIFT

(11) **EP 0 553 315 B1**
(45) Veröffentlichungstag und Bekanntmachung des Hinweises auf die Patenterteilung: **12.06.1996**
(21) Anmeldenummer: 92915520.8
(22) Anmeldetag: 04.07.1992
(51) Int. Cl.: B03C 7/00, B03C 7/12, B29B 17/02

(54) **VERFAHREN ZUR TRENNUNG VON POLYETHYLENTEREPHTHALAT (PET) UND POLYVINYLCHLORID (PVC)**
METHOD OF SEPARATING POLY(ETHYLENE TEREPHTHALATE) (PET) AND POLY(VINYL CHLORIDE) (PVC)
PROCEDE DE SEPARATION DU POLYETHYLENE-TEREPHTALATE (PETP) ET DU CHLORURE DE POLYVINYLE(PVC)

(30) Priorität: 21.08.1991 DE 4127575
(43) Veröffentlichungstag der Anmeldung: 04.08.1993
(73) Patentinhaber: KALI UND SALZ BETEILIGUNGS AKTIENGESELLSCHAFT, D-34111 Kassel (DE)
(72) Erfinder: STAHL, Ingo, D-3502 Vellmar (DE); HOLLSTEIN, Axel, D-3500 Kassel (DE); KLEINE-KLEFFMANN, Ulrich, D-6430 Bad Hersfeld (DE); GEISLER, Iring, D-6430 Bad Hersfeld (DE); NEITZEL, Ulrich, D-3500 Kassel (DE)
(86) Internationale Anmeldenummer: EP9201514
(87) Internationale Veröffentlichungsnummer: WO9303851

(56) Entgegenhaltungen:
- DE-A- 3 035 649
- DE-A- 3 227 874
- GB-A- 1 107 574

## Beschreibung

Die Erfindung betrifft ein Verfahren zur Trennung von Kunststoffteilchen eines Kunststoffgemenges von Kunststoffen chemisch unterschiedlicher Art, die jedoch in einem sich überschneidenden Dichtebereich liegen, wie z.B. Polyethylenterephthalat (PET) und Polyvinylchlorid (PVC), durch ein elektrostatisches Trennverfahren mittels eines Freifallscheiders.

In vielen Ländern fallen riesige Mengen an vermischten Kunststoffabfällen an. Ein bekanntes Beispiel dafür sind gebrauchte Einwegkunststoffgetränkeflaschen. Diese Flaschen bestehen aus PVC bzw. PET. Zusätzlich weisen die Flaschen in der Regel einen Polyethylenschraubdeckel auf, und die PET-Flaschen sind mit einem Bodenteil aus Polyethylen (PE) versehen. Bei der Sammlung dieser Flaschen fällt ein gemischter Kunststoffabfall an, bestehend aus PET, PVC und PE.
Eine direkte Wiederverwertung der vermischten Flaschenkunststoffe ist nicht möglich, da PET erst bei 260°C schmilzt, während PVC sich bereits oberhalb der Erweichungstemperatur von 160°C unter HCl-Abspaltung zersetzt und PE schon bei 105 - 135°C schmilzt.

Für solche vermischten Kunststoffe gibt es daher keine nennenswerten Wiederverwertungsmöglichkeiten, so daß die Abfallkunststoffe bislang meist nicht gesammelt, sondern über den Hausmüll entsorgt werden, d.h., letztlich verbrannt oder deponiert werden.

Wegen des knapp werdenden Deponieraumes und des Widerstandes der Bevölkerung gegen die Errichtung neuer Müllverbrennungsanlagen wird diese Art der Entsorgung in Zukunft stark eingeschränkt werden, u.a. durch behördliche Vorschriften zur Wiederverwertung.

Für vermischte PVC-haltige Kunststoffe lassen sich in der Regel auch keine Erlöse erzielen; vielmehr verlangt der Verwerter häufig noch eine Gutschrift, die sich an den eingesparten Deponiekosten orientiert.
Demgegenüber gibt es für sortenreine Recyclingkunststoffe seit langem einen Markt, wobei sich die Preise hierfür an den Preisen für die Neuware ausrichten. Je nach Qualität wird für Recyclingware bis zu 60 % des Wertes der Neuware erzielt. Es besteht daher ein großes Interesse an Verfahren zur Trennung von PVC-haltigen vermischten Kunststoffen. Für die Trennung von Kunststoffen unterschiedlicher Dichte ist bereits der Einsatz von Hydrozyklonen bekannt. Dieses Verfahren versagt allerdings dann, wenn die zu trennenden Kunststoffe, wie hier vorgesehen, im gleichen Dichtebereich liegen.

Weiterhin ist ein Verfahren bekannt geworden, das die unterschiedlichen Schmelzpunkte der Kunststoffe eines Gemenges zur Trennung ausnutzt. Das Kunststoffgemenge wird gemahlen und erhitzt, wobei die zuerst schmelzenden PVC-Teilchen an einer rotierenden Walze haften und aus dem Gemenge ausgetragen werden. Da der Vorgang des Ausschmelzens sehr langsam vor sich geht, ist dieses Verfahren nur für geringe Durchsätze geeignet und kommt daher für eine großtechnische Anwendung nicht in Frage.

Weiterhin ist ein Verfahren bekannt geworden, das mit Röntgenstrahldetektor arbeitet. Nach diesem Verfahren werden die PVC-Flaschen auf spektroskopischem Wege identifiziert und mechanisch sortiert. Solche Anlagen weisen einen geringen Durchsatz auf. Das Verfahren ist auf ganze Flaschen beschränkt.

Nach GB-A-1,107,574 ist ein Verfahren zur elektrostatischen Sortierung eines körnigen nichtleitenden Materials bekannt, nach dem das zu sortierende Körnergemisch in einem Fließbett getrocknet wird. Zur Trocknung wird dabei der Luftstrom mit etwa 60 - 100 °C eingeblasen. Durch die Fluidisierung der Teilchen und deren Kontaktierung untereinander werden die Teilchen unterschiedlich aufgeladen und im gleichen Apparat durch ein vertikales elektrisches Feld derart voneinander getrennt, daß die Teilchen einer bestimmten Polarität aus dem Fließbett herausgezogen werden.

Aus der DE-PS 30 35 649 ist ein Verfahren der eingangs genannten Art bekannt.

Hierbei wird das Kunststoffgemenge bis auf eine einheitliche Teilchengröße von 3 - 7 mm gebracht, dann triboelektrisch aufgeladen und in einem Freifallscheider, zwischen dessen Elektroden ein elektrostatisches Feld von 3 - 5 kV/cm aufrechterhalten wird, eingeführt.

Hierbei wird ein Teil des Gutes entsprechend der Ladung an der jeweiligen Elektrode abgeschieden, während ein weiterer Teil des Gemenges als sogenanntes Mittelgut durch den Freifallscheider fällt, da es aufgrund mangelhafter elektrostatischer Aufladung von keiner Elektrode angezogen wird. Außerdem waren Kunststoffe gleicher Dichte der elektrostatischen Trennung bisher nicht zugänglich.

Nachteilig an dem bekannten Verfahren ist, daß hierbei erhebliche Mengen an Mittelgut anfallen.

Es wurde nun herausgefunden, daß eine Erhöhung des Abscheidungsgrades dadurch erreicht werden kann bzw. bei bestimmten Kunststoffgemengen überhaupt eine wirksame Trennung ermöglicht wird, daß vor der triboelektrischen Aufladung das Kunststoffgemenge einer Temperaturbehandlung bei 70 - 100 °C über einen Zeitraum von mindestens 5 min unterworfen wird.

Hierdurch erfolgt gleichzeitig eine Trocknung des Gemenges, wenn das Kunststoffgemenge einen Restwasseranteil ausweisen sollte. Nunmehr ist auch die Trennung von Kunststoffen gleicher bzw. sehr ähnlicher Dichte möglich.

Es wird angenommen, daß durch diese Wärmebehandlung eine Veränderung in der Oberfläche des Kunststoffes bewirkt wird, der eine bessere elektrostatische Aufladung ermöglicht.

Die anschließende triboelektrische Aufladung des Kunststoffgemenges erfolgt vorteilhaft bei einer Temperatur von 15 - 50°C, vorzugsweise von 20 - 35°C, in einer relativen Feuchte der umgebenen Luft von 10 - 40 %, vorzugsweise 15 - 20 %. Für ein unter diesen Bedingungen konditioniertes Kunststoffgemenge reicht es auch, wenn im Freifallscheider eine Feldstärke von 2 - 3 KV/cm aufrechterhalten wird.

Bei derart geringen Feldstärken vermindert sich die Gefahr sogenannter Sprühentladungen; die Sprühentladungen können eine Entzündung der Kunststoffteilchen, bzw. eine Staubexplosion, bewirken.

Vorteilhaft hat das Kunststoffgemenge eine Teilchengröße von unter 10 mm, vorzugsweise von unter 6 mm, wobei das Kunststoffgemenge, das beispielsweise aus zerschnittenen Einwegflaschen besteht, vor der Wärmebehandlung von Stoffen, wie z.B. Papier oder Getränkeresten, durch Aufschlämmen in Wasser gereinigt wird. Die Reinigung erfolgt beispielsweise in einer Waschmühle oder mit Hilfe eines Turbowäschers, wobei je nach Grad der Verschmutzung mehrere Reinigungsvorgänge erforderlich sein können. Die Entwässerung dieses gewaschenen und damit nassen Gemenges erfolgt durch eine Entwässerungsvorrichtung, wie z.B. durch eine Zentrifuge, auf einen Restwasseranteil von ca. 2 %. Nach der Wärmebehandlung kann zur triboelektrischen Aufladung das Kunststoffgemenge in einen Fließbetttrockner eingebracht werden.

Zusätzlich kann das trockene Kunststoffgemenge zur besseren triboelektrischen Aufladung auch durch eine Spiralschnecke ausreichender Länge geschickt oder pneumatisch über eine bestimmte Strecke befördert werden.

Falls die durch einmalige Trennung erhaltene Mittelgutmenge noch zu hoch sein sollte, kann selbstverständlich die Mittelgutmenge das Verfahren nochmals durchlaufen, wobei üblicherweise ein nochmaliger Waschvorgang nicht anfällt.

Zur weiteren Trennung können die Vorkonzentrate einem weiteren nachgeschalteten Freifallscheider zugeführt werden, wobei zuvor das Mittelgut in einem zweiten Fließbetttrockner nochmals triboelektrisch aufgeladen wird.
Die Restfraktion kann dem ersten Fließbetttrockner zugeführt werden, wobei - falls es mit Feuchtgut vermischt wird - die fehlaufgeladenen Kunststoffteilchen vor der Neuaufladung entladen werden, was sich positiv auf die Erzielung einer hohen Ausbeute in bezug auf die nachfolgende Trennung im Freifallscheider auswirkt.

Das nachfolgende Beispiel mit der Darstellung des Verfahrens in einem Ablaufdiagramm dient der Erläuterung des erfindungsgemäßen Verfahrens.

### Beispiel

Ein eingesetztes Getränkeflaschengemenge wies ohne Berücksichtigung des Getränkerestes folgende Zusammensetzung auf:
19,8 % PVC
76,9 % PET
2,1 % PE
1,2 % Papier
Das Flaschengemenge wurde über eine Dosierungseinrichtung kontinuierlich einer naß arbeitenden Schneidmühle zugeführt und unter Wasserzugabe auf eine Teilchengröße von ca. 6 mm zerkleinert. Die auch Papier enthaltende Schmutzlösung wurde abgezogen.

Danach wurde das Gut in einem Wäscher kräftig gerührt und in einem Friktionsabscheider überführt und die im Kunststoff befindlichen restlichen Schmutzstoffe, wie Papier, Sand und andere Verunreinigungen, abgetrennt.

Das Kunststoffschnitzelgemenge wurde erneut mit Wasser aufgenommen und zur Abtrennung der Polyolefine einem Hydrozyklon zugeführt. Das resultierende PVC-PET-Gemisch wurde auf einem Vibrationssieb von der Flüssigkeit getrennt, geschleudert und in einem Fließbetttrockner 6 min bei 70 bis 100°C wärmebehandelt und getrocknet.

Im Fließbett lassen sich eventuell noch vorhandene letzte Papierreste mit der Abluft austragen und mittels eines Zyklons aus der Abluft abtrennen. Das vorgetrocknete Gut wurde danach in einem weiteren Fließbetttrockner noch 3 min bei 30°C kontaktiert und dabei aufgeladen.
Das aus dem Fließbett auslaufende Gut wurde kontinuierlich einer aus zwei Freifallscheidern bestehenden Trennanlage zugeführt. Das in der ersten Trennstufe erhaltene PVC-Konzentrat wurde mittels einer Spiralschnecke zum zweiten Freifallscheider befördert, wobei sich erneut eine selektive Aufladung der Kunststoffteilchen ausbildete.

Das so aufgeladene Kunststoffgemenge wurde in dem Nachtrennscheider in ein hochprozentiges PVC-Konzentrat, eine Mittelgutfraktion und eine ca. 53 % PET enthaltende Abreicherungsfraktion aufgetrennt. Letztere wurde gemeinsam mit dem Mittelgut der ersten Trennstufe zur Neuaufladung in das Fließbett rezykliert.

Alles in allem ließ sich das Flaschengemisch in eine PVC-Fraktion mit 99,3 % PVC-Gehalt, eine PET-Fraktion mit 99,4 % PET-Gehalt und eine PE-Fraktion mit 97,6 % PE-Gehalt auftrennen.

Der Reinheitsgrad liegt somit weit über 95 %, so daß von im wesentlichen sortenreinen Gemengen gesprochen werden kann, deren Wiederverwertung problemlos möglich ist.

Die Ausbeute (absolute Menge) beträgt:
96,2 % PVC
94,6 % PET
89,7 % PE.

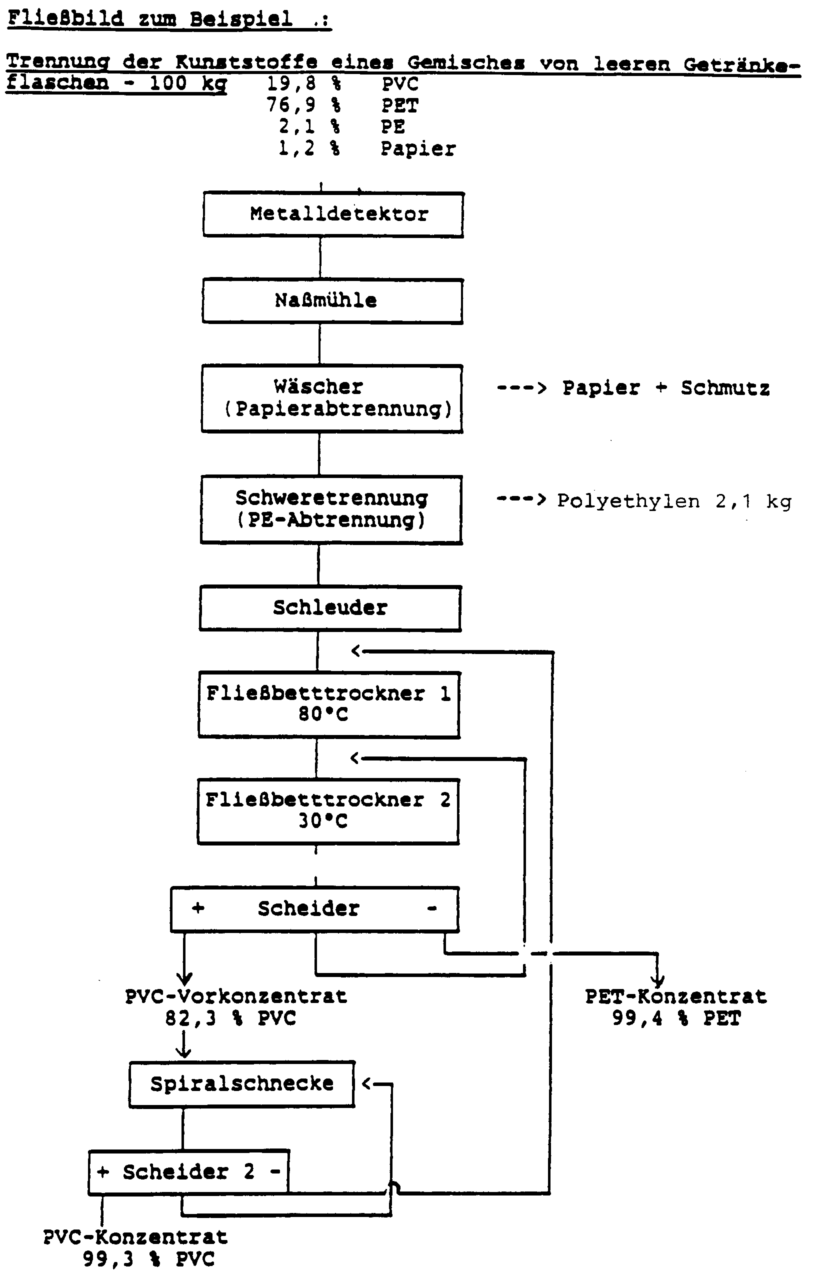

## Patentansprüche

1. Verfahren zur Trennung von zerkleinerten Kunststoffteilchen eines Kunststoffgmenges von Kunststoffen chemisch unterschiedlicher Art, die jedoch in einem sich überschneidenden Dichtebereich liegen, z. B. Polyethylenterephthalat (PET) und Polyvinylchlorid (PCV) durch triboelektrische Aufladung in einem Fließbett und anschließende Trennung mittels eines Freifallscheiders, dadurch gekennzeichnet, daß vor der triboelektrischen Aufladung das Kunststoffgemenge einer Wärmebehandlung bei 70 - 100 °C über einen Zeitraum von mindestens 5 min unterworfen wird und die anschließende triboelektrische Aufladung bei einer Temperatur von 15 - 50 °C in einer relativen Feuchte der umgebenden Luft von 10 - 40 % durchgeführt wird.

2. Verfahren nach Anspruch 1, dadurch gekennzeichnet, daß die triboelektrische Aufladung bei vorzugsweise 20 - 35 °C durchgefürt wird.

3. Verfahren nach Anspruch 1, dadurch gekennzeichnet, daß die triboelektrische Aufladung in einer relativen Feuchte der umgebenden Luft von vorzugsweise 15 - 20 % durchgeführt wird.

4. Verfahren nach Anspruch 1, dadurch gekennzeichnet, daß das Kunststoffgemenge zusätzlich zur besseren triboelektrischen Aufladung durch eine Spiralschnecke ausreichender Länge geschickt wird oder pneumatisch über eine bestimmte Strecke gefördert wird.

5. Verfahren nach Anspruch 1, dadurch gekennzeichnet, daß der Freifallscheider bei Feldstärken von 2-3 kV/cm arbeitet.

## Claims

1. A method of separating reduced-size plastics particles of a mixture of plastics of chemically different kinds which however are in an overlapping density range, for example polyethyleneterephthalate (PET) and polyvinylchloride (PVC) by triboelectric charging in a fluid bed and subsequent separation by means of a free-fall separator, characterised in that prior to the triboelectric charging operation the mixture of plastics is subjected to a heat treatment at 70 to 100°C over a period of at least 5 minutes and the subsequent triboelectric charging operation is performed at a temperature of 15 to 50 °C in a relative moisture content in the ambient air of 10 to 40%.

2. A method according to claim 1 characterised in that the triboelectric charging operation is effected at preferably 20 to 35°C.

3. A method according to claim 1 characterised in that the triboelectric charging operation is effected with a relative moisture content in the ambient air of preferably 15 to 20%.

4. A method according to claim 1 characterised in that for the purposes of better triboelectric charging the mixture of plastics is additionally passed through a spiral screw of sufficient length or is pneumatically conveyed over a given distance.

5. A method according to claim 1 characterised in that the free-fall separator operates at field strengths of 2 to 3 kV/cm.

## Revendications

1. Procédé de séparation de particules fragmentées d'un mélange de matières plastiques de nature chimique différente, dont cependant les domaines des densités se recoupent, par exemple de poly(téréphtalate d'éthylène) (PET) et de poly(chlorure de vinyle) (PCV), en leur donnant une charge par voie triboélectrique dans un lit fluidisé et en les séparant ensuite au moyen d'un séparateur à chute libre, caractérisé en ce qu'il consiste, avant de les charger par voie triboélectrique, à soumettre le mélange de matière plastique à un traitement thermique entre 70 et 100°C pendant une durée d'au moins 5 minutes et à effectuer ensuite la charge triboélectrique à une température de 15 à 50°C à une humidité relative de l'air ambiant de 10 à 40 %.

2. Procédé suivant la revendication 1, caractérisé en ce qu'il consiste à effectuer la charge triboélectrique de préférence entre 20 et 35°C.

3. Procédé suivant la revendication 1, caractérisé en ce qu'il consiste à effectuer la charge triboélectrique à une humidité relative de l'air ambiant de préférence de 15 à 20 %.

4. Procédé suivant la revendication 1, caractérisé en ce qu'il consiste en outre à envoyer le mélange de matières plastiques, pour avoir une meilleure charge triboélectrique, dans une vis en spirale de longueur suffisante ou à le transporter pneumatiquement sur une certaine étendue.

5. Procédé suivant la revendication 1, caractérisé en ce qu'il consiste à faire fonctionner le séparateur à chute libre à des intensités de champ de 2 à 3 kV/cm.
